# EUROPEAN PATENT SPECIFICATION

(11) **EP 3 062 627 B1**
(45) Date of publication and mention of the grant of the patent: **17.03.2021**
(21) Application number: 14793610.8
(22) Date of filing: 29.10.2014
(51) Int. Cl.: A23G 1/00, A23G 1/32, A23G 1/34, A23G 1/56

(54) **METHOD OF PREPARING AN ALKALIZED CAROB**
VERFAHREN ZUR HERSTELLUNG EINES ALKALISIERTEN JOHANNISBROTES
PROCÉDÉ DE PRÉPARATION D'UNE CAROUBE ALCALINISÉE

(30) Priority: 01.11.2013 US 201361898751 P
(43) Date of publication of application: 07.09.2016
(73) Proprietor: Tate & Lyle Custom Ingredients LLC, Sycamore, Illinois 60178 (US)
(72) Inventor: ELLIS, Larry Dean, Hoffman Estates, Illinois 60192 (US); ROBERT, Mark Gerald, Hoffman Estates, Illinois 60192 (US)
(74) Representative: Nieuwenhuys, William Francis
(86) International application number: PCT/GB2014/053212
(87) International publication number: WO 2015/063476

(56) References cited:
- WO-A1-2013/178945
- FR-A- 1 601 858
- FR-A1- 2 511 847
- US-A- 4 296 141
- US-A- 4 444 798
- US-A- 5 066 508
- BISPO E S ET AL: "Alkalinization process for cocoa (Theobroma cacao L.) nibs and quality evaluation of the powder by response surface methodology", JOURNAL OF FOOD SCIENCE AND TECHNOLOGY, SPRINGER (INDIA) PRIVATE LTD, INDIA, vol. 39, no. 1, 1 January 2002 (2002-01-01), pages 14-20, XP009096602, ISSN: 0022-1155
- LAU B ET AL: "COCOA SUBSTITUTES A FUTURE MUST", MODERN DAIRY, TORONTO, CA, vol. 59, no. 3, 1 May 1980 (1980-05-01), pages 12-14, XP008015822, ISSN: 0026-7651
- NOORDEN A C: "COCOA POWDER ALTERNATIVES, SOME EXPERIENCES FROM PRACTICE", CMM CONFECTIONERY MANUFACTURE AND MARKETING, J.G. KENNEDY & CO., LTD., LONDON, GB, vol. 18, no. 10, 1 October 1981 (1981-10-01), page 32/33, XP008015817, ISSN: 0007-8654

## Description

### Field of the Invention

The present invention relates generally to a method of preparing an alkalized carob. The present invention also relates to an alkalized carob and to blends of the alkalized carob with one or more of unalkalized carob, natural cocoa and alkalized cocoa. The present invention also relates to use of the alkalized carob or blend as a cocoa substitute or cocoa extender, and to a food or beverage product comprising the alkalized carob or blend.

### Background of the Invention

Chocolate is made from a combination of cocoa solids and cocoa butter. Cocoa is obtained from the cocoa bean of *Theobroma* cacao and other species of Theobroma. The inner portion of the cocoa bean, the cocoa nib, provides the main source of the cocoa solids. Prior to use in food products, cocoa nibs require processing to reduce their fat content and to grind the nib into a usable powder. Such processing of cocoa nibs can be expensive and the cocoa powder produced retains a fat content, which can be as high as 25%.

For these reasons, together with the wide fluctuation in price of the cocoa bean, in recent years many food manufacturers have taken a substantial interest in seeking out possible substitutes for cocoa solids for use in food and beverage applications. Carob, obtained from the pods of the plant *Ceratonia siliqua,* is currently used as a low cost cocoa substitute in chocolate products. Carob is attractive as a cocoa substitute as it is lower in cost than cocoa, and its cost is also typically more stable. It also has fewer calories, is lower in fat and contains no caffeine.

However, due to its pale color and associated beany flavor, carob can typically be used to replace just 10% to 15% of cocoa solids in chocolate products, and its effectiveness as a cocoa substitute is therefore limited.

The principal means by which food manufacturers have attempted to overcome the problems associated with the pale color of carob has been to roast the carob prior to its inclusion in a food or beverage product. However, this method fails to produce a carob product having a color dark enough to be considered equal to that of cocoa. This approach also introduces an additional problem in that the natural flavor of the carob product is changed and does not simulate cocoas as well as it did before it was roasted. As an alternative approach to roasting, some food manufacturers have included a caramel color or an artificial color in the food or beverage product to replace the color lost by using carob as a cocoa substitute. However, many manufacturers prefer to refrain from using artificial colors due to the growing consumer preference to avoid the consumption of food or beverage products having this ingredient.

WO2013/178945 discloses a method for preparing a mixture including seeds of at least one species of the Theobroma genus and fragmented carob pods, characterised by comprising the following steps: producing an initial mixture including said seeds and said fragmented carob pods, the latter constituting 2.5% to 25% of the initial mixture; and alkalising said initial mixture in order to obtain an alkalised mixture, in particular a mixture including cocoa and fragmented carob pods. The mixture is heated 120°C during 1h31 and the temperature is maintained 4 minutes at 120°C. The mixture is used to prepare food products as a cocoa substitute or cocoa extender. WO 2013/178945 falls under Art. 54(3) EPC.

FR2511847 discloses a method of preparing a carob powder use for the preparation of a food product.

In view of its limited substitution rate, many food manufacturers do not consider the potential cost savings associated with carob to be sufficient to warrant its use as a cocoa substitute.

The current invention seeks to alleviate one or more of the above problems by providing an improved cocoa substitute with an increased substitution rate, which is close in color and in taste to cocoa.

The current inventors have surprisingly found that by subjecting carob powder to an alkalization process, the color properties of the carob powder are greatly improved and the beany or off-flavor previously associated with the carob powder is masked, thereby providing a product closer in color and flavor to cocoa typically used in food and beverage applications. This significantly increases the effectiveness of carob powder as a cocoa substitute or a cocoa extender and for food and beverage applications in general.

### Summary of the Invention

According to a first aspect of the present invention, there is provided a method of preparing an alkalized carob, the method comprising:
(a) providing a slurry comprising water and between 10% and 60% by weight of carob powder;
(b) adding an alkali to the slurry of (a) in an amount of between 5% and 30% by dry weight to provide a reaction mixture;
(c) heating the reaction mixture to a temperature of between about 65°C and 150°C;
(d) optionally maintaining the reaction mixture at a temperature of between about 65°C and 150°C for up to 240 minutes; and
(e) drying the reaction mixture to a target moisture content of between 2% and 10% by weight to obtain an alkalized carob. to obtain an alkalized carob.

In a preferred embodiment, the reaction mixture is heated to a temperature of between about 65° C and about 95°C in step (c), and is optionally maintained at a temperature of between about 65° C and about 95°C in step (d).

The suspension comprises between about 10% and about 60% by weight of carob powder. More preferably, the suspension comprises between about 40% and about 50% by weight of carob powder.

Between about 5% and about 30% by dry weight of the alkali is added to the suspension.

More preferably, between about 5% and about 10% by dry weight of the alkali is added to the suspension.

Preferably, the alkali is selected from the group consisting of sodium hydroxide, potassium carbonate, calcium hydroxide and magnesium oxide.

Advantageously, the alkali is sodium hydroxide.

In some embodiments, step (b) further comprises addition of an oxidizing agent. Preferably, the oxidizing agent is selected from the group consisting of sodium percarbonate, sodium peroxide and hydrogen peroxide. The oxidizing agent is preferably added in an amount of between about 0.2% and about 2% by weight.

When carried out, the step (d) comprises maintaining the reaction mixture at a temperature of between about 65°C and about 150°C, preferably between about 65°C and about 95°C, for up to about 240 minutes.

Preferably, step (d) comprises maintaining the reaction mixture at a temperature of between about 65°C and about 95°C for between about 15 and about 180 minutes.

Advantageously, air may be added into the reaction mixture during step (c) or step (d).

Preferably, step (e) comprises drying the reaction mixture, preferably with a spray dryer, in a drum dryer, in a vacuum dyer, in a belt dyer or in a microwave dryer.

Step (e) comprises drying the reaction mixture to a target moisture content of between about 2% and about 10% by weight.

Conveniently, following step (c) or step (d) a sample of the reaction mixture is taken for color analysis. If following color analysis the desired color has not yet been achieved, the reaction mixture is maintained at a temperature of from about 65°C to about 150°C, preferably between about 65°C and about 95°C, for about 15 minutes and a further sample of the reaction mixture is then taken for color analysis. This step may be repeated as required.

Preferably, any one of steps (a), (b), (c) or (d) may be carried out under agitation as required.

In certain embodiments, the method further comprises the addition of one or more additives after step (c) and, if carried out, step (d) have been completed, and before step (e). The additive may be one or more selected from the group consisting of sweeteners, flavorings, stabilizers and preservatives.

The sweeteners which may be used as additives may be selected from the group consisting of nutritive sweeteners such as sucrose, glucose, fructose, corn syrup, high fructose corn syrup, honey, molasses, agave syrup and the like; natural and synthetic high intensity sweeteners such as sucralose, aspartame, acesulfame potassium (Ace K), monk fruit extracts and stevia extracts (as well as any sweet compounds isolated from such extracts, including synthetic equivalents of such compounds); sugar alcohols such as maltitol, xylitol and erythritol; and rare and synthetic sugars such as allulose, allose, mannose, sorbose, altrose, maltose and tagatose.

In some embodiments, following drying, the method further comprises adding an amount of unalkalized carob to the alkalized carob. Alternatively or additionally, an amount of natural and/or alkalized cocoa may be added to the alkalized carob product to produce an "extended cocoa product".

A second aspect of the present invention provides an alkalized carob produced by the method of the present invention.

The pH of the alkalized carob according to the present invention will typically be in the range of from about 7 to about 11. In certain preferred embodiments, the pH is in the range of from about 8 to about 9.

Preferably, the alkalized carob has a color characterized by the following values on the CIE 1976 L*a*b* scale: An "L*" value of between about 35 and 50, an "a*" value of between about 5 and 10, and a "b*" value of between about 5 and 10. Alternatively, the alkalized carob has an "L*" value of between about 35 and 50, an "a*" value of between about 5 and 7, and a "b*" value of between about 5 and 13. Alternatively, the alkalized carob has an "L*" value of between about 35 and 50, an "a*" value of between about -3 and 3, and a "b*" value of between about -3 and 3.

A third aspect of the present invention provides a blend comprising an alkalized carob according to the present invention, and one or more of unalkalized carob, natural cocoa and alkalized cocoa. Such blends typically comprise from about 5 to about 95 weight% of an alkalized carob according to the present invention, and more preferably from about 5 to about 75 weight% of an alkalized carob according to the present invention.

Examples of blends according to the present invention include the following: A blend comprising from about 5 to about 75 weight% of an alkalized carob according to the present invention, from about 5 to about 50 weight% of unalkalized carob, and from about 5 to about 95 weight% of natural cocoa; a blend comprising from about 5 to about 95 weight% of an alkalized carob according to the present invention and from about 5 to about 95 weight% of unalkalized carob; a blend comprising from about 5 to about 75 weight% of an alkalized carob according to the present invention, from about 5 to about 95 weight% of alkalized cocoa, and from about 5 to about 95 weight% of natural cocoa; a blend comprising from about 5 to about 75 weight% of an alkalized carob according to the present invention, from about 5 to about 50 weight% of unalkalized carob, from about 5 to about 95 weight% of alkalized cocoa, and from about 5 to about 95 weight% of natural cocoa; a blend comprising from about 5 to about 75 weight% of an alkalized carob according to the present invention, from about 5 to about 50 weight% of unalkalized carob and from about 5 to about 95 weight% of alkalized cocoa; a blend comprising from about 5 to about 75 weight% of an alkalized carob according to the present invention and from about 5 to about 95 weight% of alkalized cocoa; and a blend comprising from about 5 to about 75 weight% of an alkalized carob according to the present invention and from about 5 to about 95 weight% of natural cocoa.

A fourth aspect of the present invention comprises the use of an alkalized carob according to the present invention or a blend according to the present invention as a cocoa substitute or cocoa extender.

A fifth aspect of the present invention provides a food product comprising an alkalized carob of the current invention or a blend of the current invention.

Preferably, the food product is selected from the group comprising a chocolate product and a bakery product.

A sixth aspect of the present invention provides a beverage product comprising an alkalized carob of the current invention or a blend of the current invention.

Preferably, the beverage product is a dairy product.

### Brief Description of the Drawings

Figure 1 shows a sample of standard medium roast carob (a) and a sample of alkalized carob (b); and
Figure 2 shows a dairy product comprising an amount of roasted carob product (a) and a dairy product comprising an amount of alkalized carob (b).

### Detailed Description

There is a need to provide an alternative low cost cocoa substitute having a higher substitution rate, a dark color similar to cocoa and a desirable flavor. The present invention is based on the surprising finding that subjecting carob to an alkalization process provides a product closer in color and flavor to cocoa than unalkalized carob, which is also low in cost and in fat. The darker color and cleaner flavor resulting from the alkalization process allow carob to replace as much as 30 to 50% of the cocoa used in food products.

In general terms, the present invention relates to a method of preparing an alkalized carob. In a first embodiment, the method comprises:
(a) providing a slurry comprising water and between 10% and 60% by weight of carob powder;
(b) adding an alkali to the slurry of (a) in an amount of between 5% and 30% by dry weight to provide a reaction mixture;
(c) heating the reaction mixture to a temperature of between 65°C and about 150°C;
(d) optionally maintaining the reaction mixture at a temperature of between 65°C and 150° for up to 240 minutes; and
(e) drying the reaction mixture to a target moisture content of between 2% and 10% by weight to obtain an alkalized carob.

Carob powder is obtained from the pods of the plant *Ceratonia siliqua,* rather than from the seeds/beans. This is in contrast to cocoa solids, which are obtained from the cocoa bean, and particularly from the inner portion of the bean, known as the nib.

In order to obtain carob powder, the pods of *Ceratonia siliqua* are dried and ground. They may also be roasted. However, in the context of the present invention, the carob powder is preferably not roasted/ obtained from roasted pods.

The alkali added in step (b) may be any suitable food use-approved alkali. Examples of suitable alkalis include alkali metal or alkaline earth metal hydroxides or oxides. In a preferred embodiment, the alkali is selected from the group consisting of sodium hydroxide, potassium hydroxide, potassium carbonate, calcium hydroxide and magnesium oxide. Advantageously, the alkali is sodium hydroxide.

Between about 5% and 30% by dry weight of the alkali is added to the suspension. Alternatively, between about 5% and 10% by dry weight of the alkali is added to the suspension. Preferably, about 5%, 10%, 15%, 20%, 25% or 30% by dry weight of the alkali is added to the suspension.

The method of the present invention allows the user to vary the color of the alkalized carob produced in order to match the color of the cocoa product that is being replaced.

An amount of an oxidizing agent can be added during step (c) depending on the desired color of the carob product to be produced. The oxidizing agent serves to develop the color of the reaction mixture, particularly to develop a reddish color. It is preferable that between about 0.2% and 2% by dry weight of the oxidizing agent is added. More preferably, about 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9% or 2% by dry weight of the oxidizing agent is added. In one embodiment of the present invention, the oxidizing agent may be sodium percarbonate. In another embodiment of the present invention, the oxidizing agent may be sodium peroxide. In another embodiment of the present invention, the oxidizing agent may be hydrogen peroxide.

The time for which the reaction mixture is maintained in step (d) depends on the desired color of the alkalized carob. In order to achieve a final carob product having a brownish color, step (d) is omitted from the method of the present invention. In other words, no hold time is needed after the temperature of step (c) is reached. In another embodiment, step (d) comprises maintaining the reaction mixture at a temperature of between about 65°C and about 150°C, preferably between about 65°C and about 95°C, for up to about 240 minutes. In another embodiment, in order to achieve a reddish or black alkalized carob product, the reaction mixture is maintained at a temperature of between 65°C and about 150°C, preferably between about 65°C and about 95°C, for between about 15 minutes and about 180 minutes.

Conveniently, the reaction mixture is maintained at a temperature of about 65, 66, 67, 68, 69, 70, 71, 72, 73, 74, 75, 76, 77, 78, 79, 80, 81, 82, 83, 84, 85, 86, 87, 88, 89, 90, 91, 92, 93, 94 or 95°C for about 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 180, 190, 200, 205, 210, 215, 220, 225, 230, 235 or 240 minutes.

Pressurized reactors may be used if the required temperature is above atmospheric pressure boiling point. Thus, pressurized reactors may be used to reach the higher temperatures mentioned in the context of steps (c) and (d), i.e. temperatures in the range of from about 95°C to about 150°C.

After step (c) and, optionally, step (d) is completed, a sample of reaction mixture may be taken for color analysis. Color analysis may be undertaken using a colorimeter, also known as a photospectrometer. Examples of suitable instruments are those produced by HunterLab, Inc., which are often referred to as Hunter Colorimeters. One such Hunter Colorimeter which may be used is the ColorFlex EZ ®.

If the desired color has been achieved following step (c) and, optionally, step (d), the user can proceed to step (e). However, if the desired color has not yet been achieved, the reaction mixture may be maintained at a temperature of between 65°C and 150°C, preferably between about 65°C and about 95°C, for a further period of time, for example, for 15 minutes. A further sample of the reaction mixture may be subsequently taken for color analysis after this additional hold time. If the desired color has not yet been achieved, this step may be repeated as many times as necessary.

In one embodiment, air may be added into the reaction mixture. Air may be added during steps (c) and (d). The means by which the air is added to the reaction mixture is not particularly limited. The air may be injected into the reaction mixture. A high volume fan may be used to add air to the reaction mixture. The air may be pressurized but this is not essential.

Following step (c) and, optionally, step (d), the reaction mixture is dried to obtain an alkalized carob. Suitable dryers for use in this respect include a spray dryer, a drum dryer, a vacuum dryer, a belt dryer, or a microwave dryer. The method of drying used in step (e) is not particularly limited and any suitable dryer or drying method may be used. The use of a spray dryer is particularly preferred.

The reaction mixture is dried to a target moisture content of between about 2% and about 10% by weight.

According to certain embodiments of the present invention, the method further comprises the addition of one or more additives after step (c) and, if carried out, step (d) have been completed, and before step (e). Additives which may be contemplated in this regard include one or more selected from the group consisting of sweeteners, flavorings, stabilizers, preservatives and the like.

Any suitable sweetener may be used as an additive in the context of the present invention. Examples of suitable sweeteners include, but are not limited to, nutritive sweeteners such as sucrose, glucose, fructose, corn syrup, high fructose corn syrup, honey, molasses, agave syrup and the like; natural and synthetic high intensity sweeteners such as sucralose, aspartame, acesulfame potassium (Ace K), monk fruit extracts and stevia extracts (as well as any sweet compounds isolated from such extracts, including synthetic equivalents of such compounds); sugar alcohols such as maltitol, xylitol and erythritol; and rare and synthetic sugars such as allulose, allose, mannose, sorbose, altrose, maltose and tagatose.

Where an additive is used in the method of the present invention, it may be used in any suitable form. In particular, it may be added in dry form or wet form (i.e. as a liquid or in solution).

If desired, following drying, an amount of unalkalized carob may be added to the alkalized carob product to achieve a desired color or to match a target pH of the cocoa that is being replaced. Alternatively or additionally, an amount of natural and/or alkalized cocoa may be added to the alkalized carob product to produce an "extended cocoa product".

The product produced by the method of the present invention may then be packaged. For example, the product may be packaged into multiwell bags and sealed. This product is ready for use in a range of food or beverage applications.

A second aspect of the present invention provides an alkalized carob produced by the method of the present invention.

In one embodiment, the alkalized carob has a pH of between about 7 and about 11, for example of 7, 8, 9, 10 or 11. In certain preferred embodiments, the alkalized carob has a pH of from about 8 to about 9.

The color of the alkalized carob of the present invention can be characterized using the CIE 1976 L*a*b* scale (CIE International Commission on Illumination, Recommendations on Uniform Color Spaces, Color-Difference Equations, Psychometric Color Terms, Supplement No. 2 to CIE Publication No. 15, Colorimetry, 1971 and 1978), which is in widespread use. On the CIE 1976 L*a*b* scale, the "L*" value measures lightness and varies from 100 for perfect white to 0 for black. The chromaticity dimensions on CIE 1976 L*a*b* scale, the "a*" value and the "b*" value, give designations of color as follows: "a*" measures redness when positive, grey when zero and greenness when negative and "b*" measures yellowness when positive, grey when zero and blueness when negative.

In a preferred embodiment, the alkalized carob has an "L*" value of about 35, 36, 37, 38, 39, 40, 41, 42, 43, 44, 45, 46, 47, 48, 49 or 50, an "a*" value of about -3, -2, -1, 0, 1, 2, 3, 4, 5, 6, 7, 8, 9 or 10, and a "b*" value of about -3, -2, -1, 0, 1, 2, 3, 4, 5, 6, 7, 8, 9, 10, 11, 12 or 13.

In a particularly preferred embodiment, the alkalized carob has an "L*" value of between about 35 and 50, an "a*" value of between about 5 and 10, and a "b*" value of between about 5 and 10. An alkalized carob with L*a*b* values within this range displays a reddish color.

According to a further preferred embodiment, the alkalized carob has an "L*" value of between about 35 and 50, an "a*" value of between about 5 and 7, and a "b*" value of between about 5 and 13. An alkalized carob with L*a*b* values within this range displays a brownish color.

Alternatively, the alkalized carob has an "L*" value of between about 35 and 50, an "a*" value of between about -3 and 3, and a "b*" value of between about -3 and 3. An alkalized carob with L*a*b* values within this range displays a black color.

In addition to the advantages already mentioned, a further advantage of the alkalized carob of the present invention compared to cocoa is that higher concentrations of the alkalized carob may be used in food or beverage products without the products becoming too viscous. This provides opportunities to formulate new food and beverage products and achieve various flavor advantages.

The alkalized carob according to the present invention may be used as a cocoa substitute or cocoa extender, and may typically be used to replace between about 30 and about 50% of the cocoa used in a food or beverage product.

A third aspect of the present invention provides a blend comprising an alkalized carob according to the present invention, and one or more of unalkalized carob, natural cocoa and alkalized cocoa. Such blends typically comprise from about 5 to about 95 weight% of an alkalized carob according to the present invention, and more preferably from about 5 to about 75 weight% of an alkalized carob according to the present invention.

An example of a blend according to the present invention is a blend comprising alkalized carob, unalkalized carob and natural cocoa. Such blends typically comprise from about 5 to about 75 weight% of an alkalized carob according to the present invention, from about 5 to about 50 weight% of unalkalized carob, and from about 5 to about 95 weight% of natural cocoa.

A further example of a blend according to the present invention is a blend comprising alkalized carob and unalkalized carob. Such blends typically comprise from about 5 to about 95 weight% of an alkalized carob according to the present invention and from about 5 to about 95 weight% of unalkalized carob.

A further example of a blend according to the present invention is a blend comprising alkalized carob, alkalized cocoa and natural cocoa. Such blends typically comprise from about 5 to about 75 weight% of an alkalized carob according to the present invention, from about 5 to about 95 weight% of alkalized cocoa, and from about 5 to about 95 weight% of natural cocoa.

A further example of a blend according to the present invention is a blend comprising alkalized carob, unalkalized carob, alkalized cocoa and natural cocoa. Such blends typically comprise from about 5 to about 75 weight% of an alkalized carob according to the present invention, from about 5 to about 50 weight% of unalkalized carob, from about 5 to about 95 weight% of alkalized cocoa, and from about 5 to about 95 weight% of natural cocoa.

A further example of a blend according to the present invention is a blend comprising alkalized carob, unalkalized carob and alkalized cocoa. Such blends typically comprise from about 5 to about 75 weight% of an alkalized carob according to the present invention, from about 5 to about 50 weight% of unalkalized carob and from about 5 to about 95 weight% of alkalized cocoa.

A further example of a blend according to the present invention is a blend comprising alkalized carob and alkalized cocoa. Such blends typically comprise from about 5 to about 75 weight% of an alkalized carob according to the present invention and from about 5 to about 95 weight% of alkalized cocoa.

A yet further example of a blend according to the present invention is a blend comprising alkalized carob and natural cocoa. Such blends typically comprise from about 5 to about 75 weight% of an alkalized carob according to the present invention and from about 5 to about 95 weight% of natural cocoa.

The blends of the present invention may be used as a cocoa substitute or a cocoa extender in a food or beverage product.

A fourth aspect of the present invention comprises the use of an alkalized carob according to the present invention or a blend according to the present invention as a cocoa substitute or cocoa extender.

The term "cocoa substitute" refers to a product that may be used as a replacement for cocoa in a food or beverage product.

The term "extended cocoa product" refers to a cocoa product having an amount of a cocoa substitute added to the cocoa. The cocoa substitute may be referred to as a "cocoa extender" in this case.

A fifth aspect of the present invention provides a food product comprising an alkalized carob or blend according to the present invention. Non-limiting examples of a food product include a confectionary product such as chocolate or chocolate-flavored or chocolate-based confectionaries; yogurts (including, but not limited to, full fat, reduced fat and fat-free dairy yoghurts, as well non-dairy and lactose-free yoghurts and frozen equivalents of all of these); frozen desserts (including, but not limited to, frozen dairy desserts such as ice cream (including regular ice cream, soft serve ice cream and all other types of ice cream) and frozen non-dairy desserts such as non-dairy ice cream, sorbet and the like); bakery products (including, but not limited to, rolls, biscuits, cookies, cakes, pies and pastries); puddings and desserts (such as chocolate cream pies and chocolate mousses); cereal products such as breakfast cereals and cereal, nut, seed and/or fruit bars; food coatings, frostings and syrups (such as chocolate syrups), and the like. The food product may also be a dry mix for use in the preparation of one or more of the food products mentioned above (or any other food products), for example a dry cake mix, cookie mix, pastry mix, pie mix and the like. The food product may also be an animal feed product. The food product of the invention may comprise the alkalized carob or the blend as a coating formed on the surface of the product.

By way of example, ice creams according to the present invention may have the following ingredients:

| **Ingredients:** | wt.% |
|---|---|
| Butterfat | 1.00-14.00 |
| Sugar/corn syrups | 10-20.00 |
| Alkalized cocoa | 1.00-4.50 |
| Cocoa | 0.00-2.50 |
| Alkalized carob | 1.00-1.50 |
| Carob (unalkalized) | 0.00-1.50 |
| Stabilizer/emulsifier | 0.30-1.50 |
| Standardized dairy blend | 68.65 |

By way of example, brownies according to the present invention may have the following ingredients:

| **Ingredients:** | wt.% |
|---|---|
| Sugar | 30.00-45.00 |
| Cake Flour | 12.00-22.00 |
| Vegetable Oil | 5.00-15.00 |
| Shortening | 1.00-5.00 |
| Whole Eggs | 5.00-15.00 |
| Water | 10.00-15.00 |
| Alkalized Cocoa | 3.00-6.00 |
| Carob (unalkalized) | 0.00-1.00 |
| Alkalized Carob | up to 2.00 |
| Baking Soda | 0.10-0.50 |
| Salt | 0.20-0.80 |
| Starch | 0.00-2.00 |

A sixth aspect of the present invention provides a beverage product comprising an alkalized carob or blend according to the present invention. Non-limiting examples of a beverage product include a carbonated beverage, a non-carbonated beverage, a chocolate beverage, a dairy beverage, or a non-dairy beverage. The beverage product may also be a dry mix for use in the preparation of a beverage, for example for use in the preparation of a hot chocolate drink, a milkshake or the like.

By way of example, a chocolate beverage according to the present invention may have the following ingredients:

| **Ingredients:** | wt.% |
|---|---|
| Sugar, Fructose and or HIS | 0.05-8.00 |
| Alkalized Cocoa | 0.11-2.00 |
| Natural Cocoa (non-alkalized) | 0.11-2.00 |
| Alkalized carob | 0.05-1.00 |
| Carob (unalkalized) | 0.00-1.00 |
| Salt | 0.05-0.20 |
| Corn Starch | 0.10-0.50 |
| Carrageenan | 0.01-0.40 |
| Flavor | 0.01-0.25 |
| Milk or Non Dairy Milk | 84-99.50 |

The food or beverage products according to the present invention may be low-calorie or dietetic products.

The invention will now be illustrated by the following non-limiting examples.

### Examples:

### Procedure for Color Measurement:

### Materials:

- Test Sample Solution(s)
- Hunter Lab Colorimeter (ColorFlex EZ)
- Standard Port Plate (1" Port Opening)
- Colorimeter Sample Cover
- Falcon 60 mm X 15 mm Petri Dish(s)
- Paper Towel(s)
- Kimwipe(s), medium
- Timer with alarm

### Colorimeter Settings and Specifications:

| **Scale** | **Display** | **Illuminant** | **Observer** | **Port Insert** |
|---|---|---|---|---|
| CIE L*a*b* | Absolute | D65 | 10° | Standard: 1-inch port |

### Procedure:

1. Tear off an adequate number of paper towel sheets for the number of samples to be analyzed (3 samples per sheet).
2. Fold the paper towel sheet(s), lengthwise, and place the Falcon 60 mm X 15 mm Petri Dish(es) towards the bottom of the folded Paper Towel sheet(s).
3. Remove the Falcon 60 mm X 15 mm Petri Dish lid(s), and set them aside (INVERTED).
4. Pour each Test Sample Solution into a Falcon 60 mm X 15 mm Petri Dish (make sure that the Test Sample Solution forms a surface tension dome ABOVE the Falcon 60 mm X 15 mm Petri Dish rim).
5. Set the Timer with alarm for 3 minutes.
6. While waiting for the Test Sample Solution(s) to equilibrate, standardize the HunterLab Colorimeter with the Standard Port Insert (see Owner's Manual for further instructions).
7. When the alarm sounds, take the INVERTED Falcon 60 mm X 15 mm Petri Dish lid, gripping it by the edges ONLY, and slide it across the surface of the Falcon 60 mm X 15 mm Petri Dish rim at a 30° angle, with the lid maintaining in contact with Falcon 60 mm X 15 mm Petri Dish rim at all times with GENTLE pressure (the lids have 3 notches spread evenly around the exterior of the Falcon 60 mm X 15 mm Petri Dish lid; when sliding the lid across, be sure to lead with one of these notches).
8. When the INVERTED lid lip goes over the Falcon 60 mm X 15 mm Petri Dish rim, gently press the remainder of the lid so that the entire Falcon 60 mm X 15 mm Petri Dish rim is in contact with the lid.
9. Slightly twist the lid to ensure a proper seal has been made between the INVERTED Falcon 60 mm X 15 mm Petri Dish lid and the rim.
10. Repeat steps 8 through 10 for any remaining samples. DO NOT PRESS IN THE CENTER AT ANY TIME AFTER THE SEAL HAS BEEN MADE.
11. Gripping ONLY the edges of the Falcon 60 mm X 15 mm Petri Dish, turn the dish on its side and wipe any excess solution using a Kimwipe.
12. Place the sample over the Hunter Lab Colorimeter analysis port, and center the sample.
13. Press the "GO" button on the Hunter Lab Colorimeter, to read the sample.
14. Record the L*, a*, and b* values.
15. Repeat steps 11 through 14 for any remaining samples.

### Example 1: Production of an alkalized carob:

### Materials and Methods:

A slurry of water and 40% by weight carob powder was produced and placed in a processing vessel. 10% by dry weight sodium hydroxide was added to the slurry to provide a reaction mixture. The reaction mixture was heated to 95°C to achieve a product having a brownish color. A sample of the reaction product was taken for color analysis. The reaction product was then placed into a spray dryer and dried to a target moisture content of 10% by weight.

### Results:

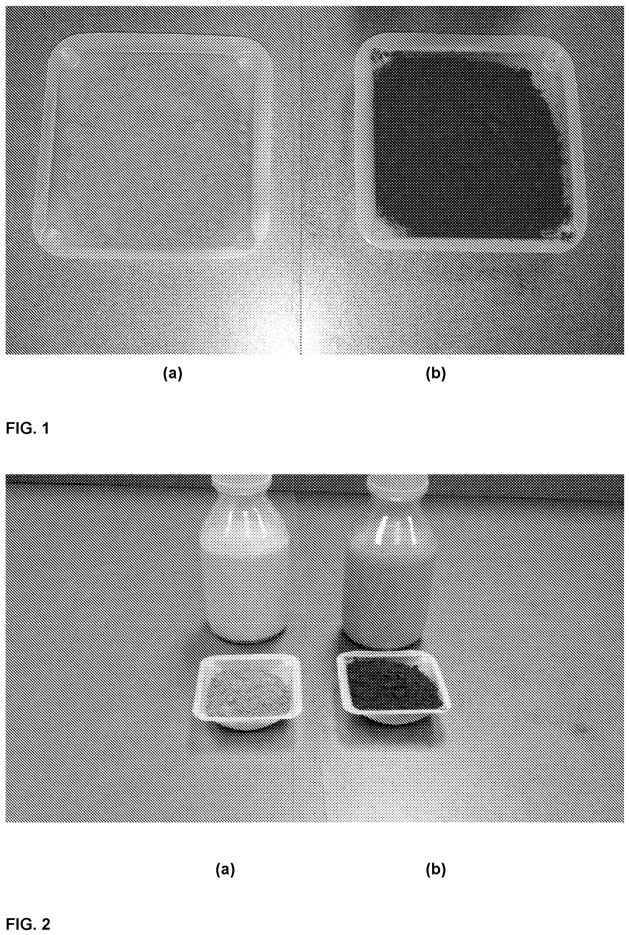

The alkalized carob product produced is illustrated by Figure 1 (b). This product has a brown color similar to that of cocoa.

To illustrate the difference in color between the alkalized carob of this example and that of carob that has been roasted using a standard method of the prior art, Figure 1 (a) illustrates a sample of roasted carob. It is clear from Figure 1(a) and (b) that roasted carob displays a pale color while alkalized carob displays a darker color similar to that of cocoa.

### Example 2: Production of a chocolate-flavored beverage:

### Materials and Methods:

An amount of the alkalized carob produced by the method of Example 1, was added to an amount of milk to produce a chocolate-flavored beverage. An amount of roasted carob was added to an amount of milk to produce a chocolate-flavored beverage.

### Results:

The beverages produced are illustrated by Figure 2. The beverage shown on the left of Figure 2 comprises roasted carob and the beverage shown on the right of Figure 2 comprises alkalized carob. Again, using the roasted carob product as a cocoa substitute provides a finished product pale in color.

### Example 3: Chocolate-flavored beverages:

### Ingredients:

The following chocolate-flavored beverages were prepared:
- Reference Example 3: A typical chocolate milk or chocolate dairy drink using a combination of alkalized and natural cocoas;
- Example 3a: Formula using alkalized carob to replace 33% of the alkalized cocoa (25% of the total cocoa content); and
- Example 3b: Formula using a combination of (unalkalized) carob powder and alkalized carob to replace 20% of the total cocoa content.

The ingredients listed below were used to prepare the chocolate-flavored beverages:

| **Ingredients:** | Reference Example 3 wt.% | Example 3a wt.% | Example 3b wt. % |
|---|---|---|---|
| Sugar, Fructose and or HIS | 5.5 | 5.5 | 5.5 |
| Alkalized Cocoa | 0.75 | 0.5 | 0.6 |
| Natural Cocoa (non-alkalized) | 0.25 | 0.25 | 0.2 |
| Alkalized carob | 0 | 0.25 | 0.15 |
| Carob | 0 | 0 | 0.05 |
| Salt | 0.12 | 0.12 | 0.12 |
| Corn Starch | 0.4 | 0.4 | 0.4 |
| Carrageenan | 0.025 | 0.025 | 0.025 |
| Flavor | 0.01 | 0.01 | 0.01 |
| Milk or Non Dairy Milk | 92.945 | 92.945 | 92.945 |

### Processing Procedure:

1) All powdered ingredients were weighed and combined.
2) A mixture of liquid ingredients (milk and liquid sugars) were added to a mixing vat, such as a Bredo or liquefier. The powdered mixture was dispersed into the liquids while mixing on medium speed.
3) Once the powder was completely dispersed, the mixture was pasteurized using either Vat, HSTS, or UHT pasteurization (Vat pasteurization - typically 155 - 160° F for at least 30 minutes; HTST Pasteurization - typically 165 - 175° F for 30 seconds; UHT pasteurization - typically 285 - 290° F for 3 seconds).
4) The mixture was homogenized at 800+200 psig.
5) The mixture was cooled to 40° F, held in a pasteurized tank for a minimum of 4 hours, then packaged.

For a dry base powder to be used for hot or cold chocolate beverages, the dry mixture (above) can be pre-mixed with or without dairy proteins, then instantized to create a base powder for instant chocolate beverages.

### Example 4: Ice creams:

### Ingredients:

The following ice creams were prepared:
- Reference Example 4: A typical chocolate ice cream formula using a combination of alkalized and natural cocoas;
- Example 4a: Formula using alkalized carob to replace 30% of the alkalized cocoa (25% of the total cocoa content); and
- Example 4b: Formula using a combination of (unalkalized) carob powder and alkalized carob to replace 25% of the total cocoa content.

The ingredients listed below were used to prepare the ice creams:

| **Ingredients:** | Reference Example 4 | Example 4a | Example 4b |
|---|---|---|---|
| | wt.% | wt.% | wt. % |
| Butterfat | 10 | 10 | 10 |
| Sugar/corn syrups | 18 | 18 | 18 |
| Alkalized cocoa | 2.5 | 1.75 | 2 |
| Cocoa | 0.5 | 0.5 | 0.25 |
| Alkalized carob | 0 | 0.75 | 0.5 |
| Carob | 0 | 0 | 0.25 |
| Stabilizer/emulsifier | 0.35 | 0.35 | 0.35 |
| Standardized dairy blend | 68.65 | 68.65 | 68.65 |

### Processing Procedure:

1) All powdered ingredients were weighed and combined.
2) A mixture of liquid ingredients (milk and liquid sugars) was added to a mixing vat, such as a Bredo or liquefier. The powdered ingredients were dispersed into the liquids while mixing on medium speed.
3) Once the powder was completely dispersed, the mixture was pasteurized using either Vat, HSTS, or UHT pasteurization (Vat pasteurization - typically 155 - 160° F for at least 30 minutes; HTST Pasteurization - typically 165 - 175° F for 30 seconds; UHT pasteurization - typically 285 - 290° F for 3 seconds).
4) The mixture was homogenized at 1500+500 psig.
5) The mixture was cooled to 40° F, held in a pasteurized tank for a minimum of 4 hours, then packaged.

### Example 5: Baked brownies:

### Ingredients:

The following baked brownies were prepared:
- Reference Example 5: A typical chocolate brownie formula using alkalized cocoas;
- Reference Example 5a: Formula using (unalkalized) carob powder to replace 20% of the alkalized cocoa; and
- Example 5b: Formula using alkalized carob to replace 33% of the alkalized cocoa content.

The ingredients listed below were used to prepare the brownies:

| **Ingredients:** | Reference Example 5 | Reference Example 5a | Reference Example 5b |
|---|---|---|---|
| | wt.% | wt.% | wt. % |
| Sugar | 39 | 39 | 39 |
| Cake Flour | 17 | 17 | 17 |
| Vegetable Oil | 10 | 10 | 10 |
| Shortening | 3.3 | 3.3 | 3.3 |
| Whole Eggs | 11 | 11 | 11 |
| Water | 13 | 13 | 13 |
| Alkalized Cocoa | 4 | 3.2 | 2.67 |
| Carob | - | 0.8 | - |
| Alkalized Carob | - | - | 1.33 |
| Baking Soda | 0.2 | 0.2 | 0.2 |
| Salt | 0.5 | 0.5 | 0.5 |
| Starch | 2 | 2 | 2 |

### Processing Procedure:

1) All powdered ingredients were weighed and combined. The was added to a Hobart or similar mixer.
2) The melted shortening was added to the dry blend, and was mixed and dispersed on Speed 1 for 1 minute.
3) Water, eggs, and oil were added to the mixture and mixed on Speed 1 for 1 minute.
4) The mixture was mixed on Speed 2 for 30 seconds.
5) 500 grams of batter was added to an 8x8 rectangular pan.
6) The mixture was baked at 325° F in a pre-heated oven for 30-32 minutes.

## Claims

1. A method of preparing an alkalized carob, the method comprising:
(a) providing a slurry comprising water and between 10% and 60% by weight of carob powder;
(b) adding an alkali to the slurry of (a) in an amount of between 5% and 30% by dry weight to provide a reaction mixture;
(c) heating the reaction mixture to a temperature of between 65° C and 150°C;
(d) optionally maintaining the reaction mixture at a temperature of between 65°C and 150°C for up to 240 minutes; and
(e) drying the reaction mixture to a target moisture content of between 2% and 10% by weight to obtain an alkalized carob.

2. A method according to claim 1, wherein the reaction mixture is heated to a temperature of between 65° C and 95°C in step (c), and wherein the reaction mixture is optionally maintained at a temperature of between 65° C and 95°C in step (d).

3. A method according to claim 1 or 2, wherein the alkali is selected from the group consisting of sodium hydroxide, potassium carbonate, calcium hydroxide and magnesium oxide, and is preferably sodium hydroxide.

4. A method according to any one of the preceding claims, wherein step (b) further comprises addition of an oxidizing agent which is preferably one or more selected from the group consisting of sodium percarbonate, sodium peroxide, and hydrogen peroxide, and is preferably added in an amount of between 0.2% and 2% by dry weight.

5. A method according to any one of the preceding claims, wherein step (d) comprises maintaining the reaction mixture at a temperature of between 65°C and 95°C for between 15 and 180 minutes.

6. A method according to any one of the preceding claims, wherein air is added to the reaction mixture during step (c) and/or (d).

7. A method according to any one of the preceding claims, wherein step (e) comprises drying the reaction mixture with a spray dryer, drum dryer, in a vacuum dryer, in a belt dryer or microwave dryer.

8. A method according to any one of the preceding claims, wherein, following step (c) and/or step (d), a sample of the reaction mixture is taken for color analysis, and, if following color analysis the desired color has not been achieved, the reaction mixture is maintained at a temperature of from 65°C to 95°C for 15 minutes and a further sample of the reaction mixture is taken for color analysis.

9. A method according to any one of the preceding claims, wherein steps (a), (b), (c) and/or (d) is/are carried out under agitation.

10. A method according to any one of the preceding claims, wherein the method further comprises the addition of one or more additives after step (c) and, if carried out, step (d) have been completed, and before step (e), wherein the additive is preferably one or more selected from the group consisting of sweeteners, flavorings, stabilizers and preservatives, wherein the sweeteners are preferably selected from the group consisting of nutritive sweeteners such as sucrose, glucose, fructose, corn syrup, high fructose corn syrup, honey, molasses, agave syrup and the like; natural and synthetic high intensity sweeteners such as sucralose, aspartame, acesulfame potassium (Ace K), monk fruit extracts and stevia extracts (as well as any sweet compounds isolated from such extracts, including synthetic equivalents of such compounds); sugar alcohols such as maltitol, xylitol and erythritol; and rare and synthetic sugars such as allulose, allose, mannose, sorbose, altrose, maltose and tagatose.

11. A method according to any one of the preceding claims, further comprising adding an amount of unalkalized carob to the alkalized carob and/or adding an amount of natural and/or alkalized cocoa to the alkalized carob.

12. An alkalized carob produced by the method of any one of the preceding claims.

13. An alkalized carob according to claim 12, having a color **characterized by** the following values on the CIE 1976 L*a*b* scale: An "L*" value of between 35 and 50, an "a*" value of between 5 and 10, and a "b*" value of between 5 and 10; an "L*" value of between 35 and 50, an "a*" value of between 5 and 7, and a "b*" value of between 5 and 13; or an "L*" value of between 35 and 50, an "a*" value of between -3 and 3, and a "b*" value of between -3 and 3.

14. An alkalized carob according to claim 12 or 13, wherein the pH of the alkalized carob is in the range of from 7 to 11, preferably from 8 to 9.

15. A blend comprising an alkalized carob according to any of Claims 12 to 14 and one or more selected from the group consisting of unalkalized carob, natural cocoa and alkalized cocoa, wherein the blend preferably comprises from 5 to 95 weight% of alkalized carob, preferably from 5 to 75 weight% of alkalized carob.

16. A blend according to Claim 15, wherein the blend is a blend selected from the group consisting of: A blend comprising from 5 to 75 weight% of alkalized carob, from 5 to 50 weight% of unalkalized carob, and from 5 to 95 weight% of natural cocoa; a blend comprising from 5 to 95 weight% of alkalized carob and from 5 to 95 weight% of unalkalized carob; a blend comprising from 5 to 75 weight% of alkalized carob, from 5 to 95 weight% of alkalized cocoa, and from 5 to 95 weight% of natural cocoa; a blend comprising from 5 to 75 weight% of alkalized carob, from 5 to 50 weight% of unalkalized carob, from 5 to 95 weight% of alkalized cocoa, and from 5 to 95 weight% of natural cocoa; a blend comprising from 5 to 75 weight% of alkalized carob, from 5 to 50 weight% of unalkalized carob and from 5 to 95 weight% of alkalized cocoa; a blend comprising from 5 to 75 weight% of alkalized carob and from 5 to 95 weight% of alkalized cocoa; and a blend comprising from 5 to 75 weight% of alkalized carob and from 5 to 95 weight% of natural cocoa.

17. Use of an alkalized carob according to any one of claims 12 to 14 or of a blend according to claim 15 or 16 as a cocoa substitute or cocoa extender.

18. A food product comprising an alkalized carob according to any one of claims 12 to 14 or a blend according to claim 15 or 16, wherein the food product is preferably a chocolate product or a bakery product.

19. A beverage product comprising an alkalized carob according to any one of claims 12 to 14 or a blend according to claim 15 or 16, wherein the beverage product is preferably a dairy product.

## Patentansprüche

1. Verfahren zum Herstellen eines alkalisierten Johannesbrots, das Verfahren umfassend:
(a) Bereitstellen einer Schlämme, die Wasser und zwischen 10 % und 60 % nach Gewicht Johannesbrotpulver umfasst;
(b) Hinzufügen eines Alkalis zu der Schlämme von (a) in einer Menge zwischen 5 % und 30 % nach Trockengewicht, um eine Reaktionsmischung bereitzustellen;
(c) Erwärmen der Reaktionsmischung auf eine Temperatur zwischen 65 °C und 150 °C;
(d) wahlweise Halten der Reaktionsmischung bei einer Temperatur zwischen 65 °C und 150 °C bis zu 240 Minuten; und
(e) Trocknen der Reaktionsmischung auf einen angestrebten Feuchtigkeitsgehalt zwischen 2 % und 10 % nach Gewicht, um ein alkalisiertes Johannesbrot zu erhalten.

2. Verfahren nach Anspruch 1, wobei die Reaktionsmischung auf eine Temperatur zwischen 65 °C und 95 °C in Schritt (c) erwärmt wird und wobei die Reaktionsmischung wahlweise bei einer Temperatur zwischen 65 °C und 95 °C in Schritt (d) gehalten wird.

3. Verfahren nach Anspruch 1 oder 2, wobei das Alkali aus der Gruppe ausgewählt wird, bestehend aus Natriumhydroxid, Kaliumcarbonat, Calciumhydroxid und Magnesiumoxid, und vorzugsweise Natriumhydroxid ist.

4. Verfahren nach einem der vorstehenden Ansprüche, wobei Schritt (b) ferner umfasst, Hinzufügen eines Oxidierungsmittels, das vorzugsweise eines oder mehrere ist, ausgewählt aus der Gruppe, bestehend aus Natriumpercarbonat, Natriumperoxid und Wasserstoffperoxid, und vorzugsweise in einer Menge zwischen 0,2 % und 2 % nach Trockengewicht hinzugefügt wird.

5. Verfahren nach einem der vorstehenden Ansprüche, wobei Schritt (d) umfasst, die Reaktionsmischung bei einer Temperatur zwischen 65 °C und 95 °C zwischen 15 und 180 Minuten zu halten.

6. Verfahren nach einem der vorstehenden Ansprüche, wobei Luft der Reaktionsmischung während Schritt (c) und/oder (d) hinzugefügt wird.

7. Verfahren nach einem der vorstehenden Ansprüche, wobei Schritt (e) umfasst, die Reaktionsmischung mit einem Sprühtrockner, Walzentrockner, in einem Vakuumtrockner, in einem Bandtrockner oder Mikrowellentrockner zu trocknen.

8. Verfahren nach einem der vorstehenden Ansprüche, wobei folgend auf Schritt (c) und/oder (d) eine Probe der Reaktionsmischung für Farbanalyse genommen wird, und, wenn folgend auf die Farbanalyse die gewünschte Farbe nicht erreicht wurde, die Reaktionsmischung bei einer Temperatur von 65 °C bis 95 °C 15 Minuten gehalten wird und eine weitere Probe der Reaktionsmischung für Farbanalyse genommen wird.

9. Verfahren nach einem der vorstehenden Ansprüche, wobei die Schritte (a), (b), (c) und/oder (d) unter Bewegen ausgeführt werden.

10. Verfahren nach einem der vorstehenden Ansprüche, wobei das Verfahren ferner das Hinzufügen eines oder mehrerer Zusätze umfasst, nachdem Schritt (c) und, falls ausgeführt, Schritt (d) beendet wurden, und vor Schritt (e), wobei der Zusatz vorzugsweise einer oder mehrere sind, die aus der Gruppe ausgewählt wurden, bestehend aus Süßungsmitteln, Aromastoffen, Stabilisierungsmitteln und Konservierungsmitteln, wobei die Süßungsmittel vorzugsweise aus der Gruppe ausgewählt werden, bestehend aus nutritiven Süßungsmitteln wie Saccharose, Glucose, Fructose, Maissirup, Maissirup mit hohem Fructosegehalt, Honig, Melasse, Agavensirup und dergleichen; natürlichen und synthetischen Süßungsmitteln hoher Intensität wie Sucralose, Aspartam, Acesulfamkalium (Ace K), Mönchsfruchtextrakten und Steviaextrakten (sowie jegliche aus derartigen Extrakten isolierte süße Verbindungen einschließlich synthetische Äquivalente derartiger Verbindungen); Zuckeralkoholen wie Maltitol, Xylitol und Erythritol; und seltenen und synthetischen Zuckern wie Allulose, Allose, Mannose, Sorbose, Altrose, Maltose und Tagatose.

11. Verfahren nach einem der vorstehenden Ansprüche, ferner umfassend, Hinzufügen einer Menge von nicht alkalisiertem Johannesbrot zu dem alkalisierten Johannesbrot und/oder Hinzufügen einer Menge von natürlichem und/oder alkalisiertem Kakao zu dem alkalisierten Johannesbrot.

12. Alkalisiertes Johannesbrot, hergestellt durch das Verfahren nach einem der vorstehenden Ansprüche.

13. Alkalisiertes Johannesbrot nach Anspruch 12, das eine Farbe aufweist, die durch die folgenden Werte auf der Skala CIE 1976 L*a*b* gekennzeichnet wird: ein "L*"-Wert zwischen 35 und 50, ein "a*"-Wert zwischen 5 und 10 und ein "b*"-Wert zwischen 5 und 10; ein "L*"-Wert zwischen 35 und 50, ein "a*"-Wert zwischen 5 und 7 und ein "b*"-Wert zwischen 5 und 13; oder ein "L*"-Wert zwischen 35 und 50, ein "a*"-Wert zwischen -3 und 3 und ein "b*"-Wert zwischen -3 und 3.

14. Alkalisiertes Johannesbrot nach Anspruch 12 oder 13, wobei der pH-Wert des alkalisierten Johannesbrots im Bereich von 7 bis 11, vorzugsweise von 8 bis 9 ist.

15. Mischung, die ein alkalisiertes Johannesbrot nach einem der Ansprüche 12 bis 14 umfasst und eines oder mehrere, ausgewählt aus der Gruppe, bestehend aus einem nicht alkalisierten Johannesbrot, natürlichem Kakao und alkalisiertem Kakao, umfasst, wobei die Mischung vorzugsweise 5 bis 95 Gewichts-% alkalisiertes Johannesbrot, vorzugsweise 5 bis 75 Gewichts-% alkalisiertes Johannesbrot umfasst.

16. Mischung nach Anspruch 15, wobei die Mischung eine Mischung ist, die aus der Gruppe ausgewählt wird, bestehend aus: eine Mischung, die 5 bis 75 Gewichts-% alkalisiertes Johannesbrot, 5 bis 50 Gewichts-% nicht alkalisiertes Johannesbrot und 5 bis 95 Gewichts-% natürlichen Kakao umfasst; einer Mischung, die 5 bis 95 Gewichts-% alkalisiertes Johannesbrot und 5 bis 95 Gewichts-% nicht alkalisiertes Johannesbrot umfasst; einer Mischung, die 5 bis 75 Gewichts-% alkalisiertes Johannesbrot, 5 bis 95 Gewichts-% alkalisierten Kakao und 5 bis 95 Gewichts-% natürlichen Kakao umfasst; einer Mischung, die 5 bis 75 Gewichts-% alkalisiertes Johannesbrot, 5 bis 50 Gewichts-% nicht alkalisiertes Johannesbrot, 5 bis 95 Gewichts-% alkalisierten Kakao, und 5 bis 95 Gewichts-% natürlichen Kakao umfasst; einer Mischung, die 5 bis 75 Gewichts-% alkalisiertes Johannesbrot, 5 bis 50 Gewichts-% nicht alkalisiertes Johannesbrot und 5 bis 95 Gewichts-% alkalisierten Kakao umfasst; einer Mischung, die 5 bis 75 Gewichts-% alkalisiertes Johannesbrot und 5 bis 95 Gewichts-% alkalisierten Kakao umfasst; und einer Mischung, die 5 bis 75 Gewichts-% alkalisiertes Johannesbrot und 5 bis 95 Gewichts-% natürlichen Kakao umfasst.

17. Verwendung eines alkalisierten Johannesbrots nach einem der Ansprüche 12 bis 14 oder einer Mischung nach Anspruch 15 oder 16 als einen Kakaoersatz oder ein Kakaostreckmittel.

18. Nahrungsmittelprodukt, das ein alkalisiertes Johannesbrot nach einem der Ansprüche 12 bis 14 oder eine Mischung nach einem der Ansprüche 15 oder 16 umfasst, wobei das Nahrungsmittelprodukt vorzugsweise ein Schokoladenprodukt oder ein Bäckereiprodukt ist.

19. Getränkeprodukt, das ein alkalisiertes Johannesbrot nach einem der Ansprüche 12 bis 14 oder eine Mischung nach einem der Ansprüche 15 oder 16 umfasst, wobei das Getränkeprodukt vorzugsweise ein Molkereiprodukt ist.

## Revendications

1. Procédé de préparation d'une caroube alcalinisée, le procédé comprenant :
(a) la fourniture d'une pâte comprenant de l'eau et entre 10 % et 60 % en poids de poudre de caroube ;
(b) l'ajout d'un alcalin à la pâte de (a) dans une quantité comprise entre 5 % et 30 % en poids sec pour fournir un mélange de réaction ;
(c) le chauffage du mélange de réaction à une température comprise entre 65°C et 150°C ;
(d) optionnellement le maintien du mélange de réaction à une température comprise entre 65 °C et 150 °C pendant 240 minutes au maximum ; et
(e) le séchage du mélange de réaction à une teneur en humidité cible comprise entre 2 % et 10 % en poids pour obtenir une caroube alcalinisée.

2. Procédé selon la revendication 1, dans lequel le mélange de réaction est chauffé à une température comprise entre 65°C et 95°C dans l'étape (c), et dans lequel le mélange de réaction est optionnellement maintenu à une température comprise entre 65°C et 95°C dans l'étape (d).

3. Procédé selon la revendication 1 ou 2, dans lequel l'alcalin est sélectionné dans le groupe constitué d'hydroxyde de sodium, de carbonate de potassium, d'hydroxyde de calcium et d'oxyde de magnésium, et est de préférence un hydroxyde de sodium.

4. Procédé selon l'une quelconque des revendications précédentes, dans lequel l'étape (b) comprend en outre l'ajout d'un agent oxydant qui est de préférence un ou plusieurs sélectionnés dans le groupe constitué de percarbonate de sodium, de peroxyde de sodium, et de peroxyde d'hydrogène, et est de préférence ajouté dans une quantité comprise entre 0,2 % et 2 % en poids sec.

5. Procédé selon l'une quelconque des revendications précédentes, dans lequel l'étape (d) comprend le maintien du mélange de réaction à une température comprise entre 65°C et 95°C pendant 15 à 180 minutes.

6. Procédé selon l'une quelconque des revendications précédentes, dans lequel de l'air est ajouté au mélange de réaction pendant l'étape (c) et/ou (d).

7. Procédé selon l'une quelconque des revendications précédentes, dans lequel l'étape (e) comprend le séchage du mélange de réaction avec un sécheur à vaporisation, un sécheur à tambour, dans un sécheur à vide, dans un sécheur à courroie ou un sécheur à micro-ondes.

8. Procédé selon l'une quelconque des revendications précédentes, dans lequel, suite à l'étape (c) et /ou à l'étape (d), un échantillon du mélange de réaction est prélevé pour une analyse de couleur, et, si, suite à l'analyse de couleur, la couleur souhaitée n'a pas été obtenue, le mélange de réaction est maintenu à une température comprise entre 65 °C et 95 °C pendant 15 minutes et un autre échantillon du mélange de réaction est prélevé pour une analyse de couleur.

9. Procédé selon l'une quelconque des revendications précédentes, dans lequel les étapes (a), (b), (c) et/ou (d) sont réalisées sous agitation.

10. Procédé selon l'une quelconque des revendications précédentes, dans lequel le procédé comprend en outre l'ajout d'un ou plusieurs additifs une fois que l'étape (c) et, si elle est réalisée, l'étape (d) ont été achevées, et avant l'étape (e), dans lequel l'additif est de préférence un ou plusieurs sélectionnés dans le groupe constitué d'édulcorants, d'arômes, de stabilisants et de conservateurs, dans lequel les édulcorants sont de préférence sélectionnés dans le groupe constitué d'édulcorants nutritifs tels que le saccharose, le glucose, le fructose, le sirop de maïs, le sirop de maïs à forte teneur en fructose, le miel, la mélasse, le sirop d'agave et similaire ; des édulcorants haute intensité naturels et synthétiques comme le sucralose, l'aspartame, l'acésulfame potassium (ace K), des extraits de fruits du moine et des extraits de stévia (ainsi que tout composé sucré isolé de ces extraits, y compris des équivalents synthétiques de ces composés) ; des alcools de sucre comme le maltitol, le xylitol et l'érythritol ; et des sucres synthétiques et rares comme l'allulose, l'allose, le mannose, le sorbose, l'altrose, le maltose et le tagatose.

11. Procédé selon l'une quelconque des revendications précédentes, comprenant en outre l'ajout d'une quantité de caroube non alcalinisée à la caroube alcalinisée et/ou l'ajout d'une quantité de cacao naturel et/ou alcalinisé à la caroube alcalinisée.

12. Caroube alcalinisée produite par le procédé selon l'une quelconque des revendications précédentes.

13. Caroube alcalinisée selon la revendication 12, présentant une couleur **caractérisée par** les valeurs suivantes sur l'échelle L*a*b CIE 1976 : une valeur «L*» comprise entre 35 et 50, une valeur «a*» comprise entre 5 et 10, et une valeur «b*» comprise entre 5 et 10 ; une valeur « L*» comprise entre 35 et 50, une valeur «a*» comprise entre 5 et 7, et une valeur «b*» comprise entre 5 et 13 ; ou une valeur «L*» comprise entre 35 et 50, une valeur «a*» comprise entre -3 et 3, et une valeur «b*» comprise entre -3 et 3.

14. Caroube alcalinisée selon la revendication 12 ou 13, dans laquelle le pH de la caroube alcalinisée est dans la plage de 7 à 11, de préférence de 8 à 9.

15. Mélange comprenant une caroube alcalinisée selon l'une quelconque des revendications 12 à 14 et un ou plusieurs choisis dans le groupe constitué de caroube non-alcalinisée, de cacao naturel et de cacao alcalinisé, dans lequel le mélange comprend de préférence de 5 à 95 % en poids de caroube alcalinisée, de préférence de 5 à 75 % en poids de caroube alcalinisée.

16. Mélange selon la revendication 15, dans lequel le mélange est un mélange sélectionné dans le groupe constitué de : un mélange comprenant de 5 à 75 % en poids de caroube alcalinisée, de 5 à 50 % en poids de caroube non-alcalinisée, et de 5 à 95 % en poids de cacao naturel ; un mélange comprenant de 5 à 95 % en poids de caroube alcalinisée et de 5 à 95 % en poids de caroube non-alcalinisée ; un mélange comprenant de 5 à 75 % en poids de caroube alcalinisée, de 5 à 95 % en poids de cacao alcalinisé ; et de 5 à 95 % en poids de cacao naturel ; un mélange comprenant de 5 à 75 % en poids de caroube alcalinisée, de 5 à 50 % en poids de caroube non-alcalinisée, de 5 à 95 % en poids de cacao alcalinisé et de 5 à 95 % en poids de cacao naturel ; un mélange comprenant de 5 à 75 % en poids de caroube alcalinisée, de 5 à 50 % en poids de caroube non-alcalinisée, et de 5 à 95 % en poids de cacao alcalinisé ; et un mélange comprenant de 5 à 75 % en poids de caroube alcalinisée et de 5 à 75 % en poids de cacao naturel.

17. Utilisation d'une caroube alcalinisée selon l'une quelconque des revendications 12 à 14 ou d'un mélange selon la revendication 15 ou 16, comme substitut de cacao ou diluant de cacao.

18. Produit alimentaire comprenant une caroube alcalinisée selon l'une quelconque des revendications 12 à 14 ou un mélange selon la revendication 15 ou 16, dans lequel le produit alimentaire est de préférence un produit de chocolat ou un produit de boulangerie.

19. Produit de boisson comprenant une caroube alcalinisée selon l'une quelconque des revendications 12 à 14 ou un mélange selon la revendication 15 ou 16, dans lequel le produit de boisson est de préférence un produit laitier.
